# EUROPÄISCHE PATENTSCHRIFT

(11) **EP 2 117 745 B1**
(45) Veröffentlichungstag und Bekanntmachung des Hinweises auf die Patenterteilung: **04.03.2020**
(21) Anmeldenummer: 08707031.4
(22) Anmeldetag: 14.01.2008
(51) Int. Cl.: B21D 39/02, B23K 101/00, B23K 33/00, F16B 5/08, B23K 26/035, B23K 1/00, B23K 1/005, B23K 101/18

(54) **BLECHVERBUND, VERFAHREN ZUM FÜGEN VON BLECHEN UND FÜGEVORRICHTUNG**
SHEET-METAL COMPOSITE, METHOD FOR JOINING SHEETS AND JOINING DEVICE
ASSEMBLAGE DE TÔLES, PROCÉDÉ D'ASSEMBLAGE DE TÔLES ET DISPOSITIF D'ASSEMBLAGE

(30) Priorität: 15.01.2007 DE 102007002856
(43) Veröffentlichungstag der Anmeldung: 18.11.2009
(73) Patentinhaber: FFT Produktionssysteme GmbH & Co. KG, 36041 Fulda (DE)
(72) Erfinder: SCHNEEGANS, Jochen, 36237 Wittgert (DE); KRAFT, Martin, 36124 Eichenzell (DE)
(74) Vertreter: SSM Sandmair
(86) Internationale Anmeldenummer: PCT/EP2008/000227
(87) Internationale Veröffentlichungsnummer: WO 2008/086994

(56) Entgegenhaltungen:
- EP-A1- 0 722 807
- EP-A1- 1 114 690
- DE-A1- 10 023 351
- DE-A1- 19 927 208
- JP-A- 56 009 016
- JP-A- 2007 237 283
- US-A- 5 897 796

## Beschreibung

Die Erfindung betrifft das Fügen von Blechen, unter Einschluss eines Schweiß- oder Lötprozesses.

Schweißen und Löten sind bewährte Fügeverfahren für metallische Bauteile. Bei einem automatisierten Schweiß- oder Lötprözess werden die zu fügenden Bauteile in einer Fügeposition fixiert und während des Schweißens oder Lötens nahe der momentanen Schweiß- oder Lötstelle mit einer Andrückeinrichtung, beispielsweise einem Andrückfinger oder einer Andrückrolle, gegeneinander gedrückt, wobei die Andrückeinrichtung gemeinsam mit dem Schweiß- oder Lötwerkzeug einen Fügebereich der Bauteile in Längsrichtung einer zu erzeugenden Schweiß- oder Lötnaht abfährt. Die Bauteile müssen in einer für das Schweißen oder Löten geeigneten Geometrie vorliegen. An zu fügenden Blechen werden für das Schweißen oder Löten geeignete Flansche geformt, beispielsweise noch bei der plastischen Umformung in einer Presse, oder in einem der Formgebung in einer Presse nachgelagerten Umformprozess, wie beispielsweise Kanten. Werden die Flansche noch in der Presse geformt, sind den erzeugbaren Flanschgeometrien aufgrund der Notwendigkeit des Entformens Grenzen gesetzt. Kantvorrichtungen für ein nachgelagertes Formen der Flansche sind voluminös und unflexibel. Ferner sind komplexe Kantenverläufe allenfalls mit großem Aufwand erzielbar.

Auch das Falzen hat seinen festen Platz für das Fügen von Blechen. Bekannt ist hier die Fügekombination von Rollfalzen und Kleben, durch die eine form- und stoffschlüssige Verbindung erzielt wird. Der Kleber hat neben der Erhöhung der Steifigkeit bei dynamisch beanspruchten Verbunden auch die Aufgabe, eventuell auftretende Geräusche, die zwischen den gefugten Blechen entstehen können, zu dämpfen oder zu verhindern. Des Weiteren übernimmt der Kleber eine Abdichtfunktion. Ein Vorteil der Rollfalztechnölogie ist ihre hohe Flexibilität hinsichtlich der Bauteilgeometrie. Falzwerkzeuge und -Verfahren, oder allgemeiner Bördelwerkzeuge und -verfahren, werden beispielsweise in der EP 1 685 915 A1, der EP 1 420 908 B1, der DE 100 11 954 A1 und der DE 103 38 170 B4 beschrieben.

Aus der DE 199 27 208 A1 ist ein Verfahren zum randseitigen Verbinden von Blechen bekannt, wobei vor dem Falzen wenigstens eines der Bleche mit eingeprägten Vorsprüngen versehenen wird und diese Vorsprünge während des Zusammenpressens von einem an die Schweißstelle zuführbaren Schweißwerkzeug durch Buckelschweißen mit dem anderen Blech verbunden werden.

Die DE 100 23 351 betrifft eine Vorrichtung und ein Verfahren zum Laserschweißen eines Blechverbunds in einer Einfassvorrichtung. Der stationäre Laserstrahl befindet sich dabei in einer vorbestimmten Position, in der die Einfassvorrichtung eine Aussparung aufweist, um dem Laserstrahl den Zugang zu der Schweißstelle zu ermöglichen.

Eine Methode und ein Verfahren um zwei Bleche in einem einzigen Werkzeug durch Bördeln und anschließendem Verschweißen zu einem Blechverbund zu verbinden ist aus der US 5,897,796 bekannt. Spezielle Halteelemente fixieren den Blechverbund während des Schweißens in dem Werkzeug.

Die JP 2007-237283 beschreibt eine Vorrichtung und ein Verfahren zum Herstellen eines Blechverbunds aus zwei Blechen, von denen eines eingeprägte Vorsprünge aufweist. Nach dem Bördeln wird der Blechverbund im Bereich der Vorsprünge mittels Buckelschweißens fixiert.

Die JP 56009016 beschreibt ein Verfahren zur Herstellung von Rohren aus einem Blech. Die gebogenen Enden des Blechs werden in einem Lötbad miteinander verbunden und abgedichtet.

Es ist eine Aufgabe der Erfindung, das Fügen von Bauteilen, von denen wenigstens eines ein Blech ist, im Hinblick auf Flexibilität bezüglich des Verlaufs einer Bördelkante und Fertigkeit des Verbunds zu verbessern.

Die Erfindung kombiniert einen Bördelprozess mit einem Schweiß- oder Lötprozess, der Erzeugung eines Blechverbunds nach Anspruch 1, in einem Verfahren nach Anspruch 4 oder in einer Vorrichtung nach Anspruch 9.

Durch diese erfindungsgemäße Verfahrenskombination wird ein Blechverbund aus einem Außenblech und einem Innenblech sowie optional einem oder mehreren weiteren Blechen, geschaffen, in dem das Außenblech einen um eine Bördelkante gebördelten Flansch aufweist, der mit dem Innenblech einen Stoß bildet. Im oder am Stoß verläuft eine die Bleche fest miteinander verbindende Schweiß- oder Lötnaht. Durch den in Längsrichtung der Bördelkante kontinuierlich fortschreitenden Bördelprozess wird das Außenblech schonend umgelegt. Das Außenblech weist in Querrichtung über den Bereich der Bördelkante ein deutlich gleichmäßigeres, rissärmeres Materialgefüge auf als ein Blech, das in der gleichen Geometrie beispielsweise in einer Tiefziehpresse geformt wurde. Das Gleiche gilt im Vergleich mit einem Blech, dessen Flansch in einer herkömmlichen Kantmaschine umgelegt wurde. Aufgrund der in Längsrichtung der Bördelkante fortschreitenden und deshalb stets nur lokalen Umformung kann die Bördelkante einen komplexen Verlauf mit einem oder mehreren Bögen, auch mit sich ändernden Krümmungsradien, aufweisen. Im Vergleich zu einem Blechverbund mit einer herkömmlichen Falzverbindung ist der erfindungsgemäße Blechverbund steifer, da die Schweiß- oder Lötnaht die Bleche zumindest im unmittelbaren Fügebereich fest und absolut steif miteinander verbindet Dies kommt insbesondere dynamisch beanspruchten Blechverbunden zugute, da sich die Bleche im Fügebereich nicht mehr relativ zueinander bewegen und dementsprechend aneinander reiben und somit auch keine Geräusche mehr erzeugen können. Des Weiteren versiegelt die Schweiß- oder Lötnaht den Fügebereich oder zumindest einen inneren Bereich des Fügebereichs. Es ist vorteilhaft, wenn die Naht sich über die gesamte, in Längsrichtung der Bördelkante gemessene Länge des Fügebereichs der Bleche kontinuierlich durchgehend erstreckt.

Das Außenblech ist im verbauten Zustand an einem Fahrzeug zwar vorzugsweise von außen sichtbar und kann insbesondere eine Außenhaut eines Fahrzeugs oder grundsätzlich auch jeder anderen Baueinheit bilden, wobei das Innenblech dementsprechend dem Inneren eines Fahrzeugs oder einer anderen Baueinheit zugewandt ist. Grundsätzlich dienen die Worte "Außenblech" und "Innenblech" jedoch nur der begrifflichen Unterscheidung, um darzulegen, dass zumindest das Außenblech einen gebördelten Schweiß-oder Lötflansch aufweist. Das Bördeln ist an der Außenseite des Flansches anhand von Roll- oder Gleitspuren sichtbar, falls die Oberfläche nicht nach dem Bördeln einer die Spuren beseitigenden Oberflächenbearbeitung unterzogen wurde.

Der Flansch erstreckt sich in bevorzugten Ausführungen längs eines äußeren Rands des Außenblechs und bildet im Vergleich zu dem Außenblech im Ganzen nur einen schmalen Randstreifen. Der Flansch ist über zumindest einen überwiegenden Teil der Länge der Bördelkante im Querschnitt des Außenblechs gesehen wesentlich kürzer als ein äußerer Blechbereich des Außenblechs, der über die Bördelkante in den Flansch übergeht.

Der Stoß ist ein Überlappstoß Handelt es sich um einen Überlappstoß, kann die Schweißnaht eine I-Naht sein. Bevorzugter ist die Naht im Falle eines Schweißens oder Lötens als Kehlnaht im Überlappstoß gebildet. Mittels einer Kehlnaht an einem Ende des Überlappstoßes kann der Stoß im Querschnitt des Verbunds gesehen über die gesamte Stoßlänge versiegelt und daher einer Spaltkorrosion am wirksamsten entgegengewirkt werden.

Das Außenblech bildet in seinem Bördel- oder Falzbereich mit seinem Flansch eine Tasche in die das Innenblech hinein ragt, um den Überlappstoß an einer in Bezug auf die Tasche innenliegenden Seite des Flansches zu bilden. Obgleich weniger bevorzugt, ist es aber durchaus denkbar, dass der Flansch und das Innenblech einen Überlappstoß an der von der Tasche abgewandten Außenseite des Flansches bilden. Ein taschenförmiger Bördelbereich ist ferner auch dann von Vorteil, wenn das Innenblech und der Flansch miteinander einen stumpfen Stoß bildend verschweißt oder verlötet sind.

In bevorzugten Ausführungen ist das Innenblech in der Tasche zwischen einem äußeren Rand des Flansches und einem dem Flanschrand zugewandt gegenüberliegenden Bereich des Außenblechs geklemmt, wie dies grundsätzlich von herkömmlichen Falzverbindungen bekannt ist. Vorzugsweise ist es in solchen Ausführungen beidseitig flächig je mit Flächenpressung geklemmt Das Außenblech kann in derartigen Ausführungen in seinem den Flansch umfassenden Bördelbereich im Querschnitt insbesondere U-förmig geformt sein. Für die Aufnahme von Dichtmasse im Fügebereich ist es von Vorteil, wenn das Außenblech im Querschnitt gesehen in einem die Bördelkante umfassenden Bärdelgrund einen augenförmigen Hohlraum bildet.

In erfindungsgemäßen Ausführungsformen, in denen das Innenblech in der Tasche nicht oder nicht in einem nennenswerten Ausmaß geklemmt wird, weist der Flansch mit einer Neigung von dem zugewandt gegenüberliegenden Bereich des Außenblechs weg. Die Tasche verengt sich somit in Richtung auf den die Bördelkante umfassenden Bördelgrund.

Der Flansch kann in sämtlichen Ausführungsbeispielen im Querschnitt des Blechverbunds einen gekrümmten Verlauf aufweisen. Vorzugsweise ist der Flansch in den Querschnitten jedoch gerade.

Die Erfindung eignet sich in besonderer Weise für den Einsatz in der Fahrzeugfertigung, d. h. für Blechverbunde an Luft-, Raum-, Wasser- und Landfahrzeugen, vorzugsweise Automobilen. Der Blechverbund kann insbesondere Bestandteil der Außenhaut eines Fahrzeugs sein. Einsatzschwerpunkt sind Anbauteile von Fahrzeugen, insbesondere Automobilen, wie beispielsweise Türen, Schiebedächer, Heckklappen, Kofferraumdeckel und Motorhauben. Neben derartigen beweglichen Anbauteilen eignet sich die Erfindung aber auch für zwar an eine Karosserie angebaute, aber nach dem Anbau selbst einen festen Bestandteil der Karosserie bildende Anbauteile wie beispielsweise angebaute Kotflügel. Die Erfindung eignet sich ferner auch für die Herstellung der Karosserie vor dem Anbau von Anbauteilen. So kann die Erfindung insbesondere für die Herstellung von Seitenteilen oder eines Daches eines Fahrzeugs, insbesondere eines Automobils, verwendet werden. Ein Anwendungsschwerpunkt ist beispielsweise das sogenannte Radhausfalzen an einem Kotflügel vor dem Einbau oder im eingebauten Zustand oder an einem Karosserieseitenteil. Desweiteren eignet sich die Erfindung auch zur Herstellung der Verbindung eines Seitenteils mit einem Dach einer Karosserie in einer Fertigungsstraße. Grundsätzlich ist die Erfindung jedoch auch für die Herstellung von anderen mehrdimensionalen Verbundstrukturen geeignet, da der erfindungsgemäß eingesetzte Bördelprozess grundsätzlich keiner Begrenzung hinsichtlich der Geometrie des Verbindungsflansches der Bleche unterworfen ist. Je komplexer das zu bördelnde Blech und insbesondere die Bördelkante geformt sind, desto mehr kommen die Vorteile der Erfindung gegenüber den herkömmlichen Verfahren zum Tragen. Die Erfindung ist zwar von besonderem Vorteil für die Fahrzeugindustrie, kann grundsätzlich aber auch in anderen Industriezweigen eingesetzt werden.

Bei einem erfindungsgemäßen Fügeverfahren nach Anspruch 4 werden das Außenblech und das Innenblech in einer Fügeposition relativ zueinander fixiert. An dem Außenblech wird mittels eines in Längsrichtung der Bördelkante bewegten Bördelglieds der Flansch um die Bördelkante umgelegt. Die Bördelkante kann in einem vorgelagerten Umformprozess in einer Presse durch beispielsweise Tiefziehen oder Tiefen bis zu einem gewissen Grad bereits vorgeformt sein oder erstmals in einem dem originären Blechformungsprozess nachgelagerten Bördelprozess geformt werden. In dem erfindungsgemäßen Fügeverfahren werden das Außenblech und das Innenblech in einem ersten Verfahrensschritt in der Fügeposition relativ zueinander fixiert, und das Bördeln und Schweißen oder Löten wird im fixierten Zustand ausgeführt. In der erfindungsgemäßen Verfahrensführung werden die beiden Prozesse des Bördelns und des Schweißens oder Lötens jedoch gemeinsam ausgeführt, indem das Bördelglied zugleich als Umformwerkzeug und Andrückeinrichtung für den Schweiß- oder Lötprozess verwendet wird. Das Bördelglied ersetzt in derartigen Ausführungen in Zweitfunktion die von herkömmlichen Schweiß- oder Lötprozessen bekannten Andrückfinger oder Andrückrollen.

Die Erfindung hat auch eine Vorrichtung zum Gegenstand, die sowohl Bördeln als auch Schweißen oder Löten kann. Es handelt sich um ein Kombinationswerkzeug mit einem Werkzeugkopf, einem auf dem Werkzeugkopf angeordneten Bördelwerkzeug mit wenigstens einem Bördelglied um Roll- oder Gleitbördeln und einem auf dem Werkzeugkopf angeordneten Schweiß- oder Lötwerkzeug. Das Bördelglied und das Schweiß- oder Lötwerkzeug sind so angeordnet, dass das Bördelglied eine Andrückeinrichtung für das Schweiß- oder Lötwerkzeug bildet, wenn dieses die Schweiß- oder Lötnaht erzeugt. Das Bördelwerkzeug kann mehrere Bördelglieder aufweisen, die wahlweise in einer Arbeitsposition für die Ausführung eines Bördelprozesses bewegbar am Werkzeugkopf angeordnet sind, in bevorzugten einfachen Ausführungen trägt der Werkzeugkopf jedoch nur ein einziges Bördelglied, das ferner vorzugsweise stets die Arbeitsposition einnimmt.

Das im Zusammenhang mit der Vorrichtung und dem Verfahren genannte Bördelglied kann insbesondere eine Bördelrolle oder alternativ auch ein Gleitstück sein, das bei dem Bördeln in Längsrichtung der Bördelkante auf dem Flansch gleitet. Bei dem Bördelprozess handelt es sich dementsprechend in den bevorzugten Ausführungen um ein Rollbördeln oder gegebenenfalls ein Gleitbördeln. Das Bördelglied ist so zum Schweiß- oder Lötwerkzeug angeordnet, dass es eine Andrücheinrichtung bildet.

Das Schweiß- oder Lötwerkzeug kann insbesondere so gestaltet sein, dass es die für das Schweißen oder Löten erforderliche Wärme mittels eines Energiestrahls erzeugt. Das Schweiß- oder Lötwerkzeug ist in bevorzugten Ausführungen ein Laserschweiß- oder Laserlötwerkzeug. In ebenfalls bevorzugten Ausführungen handelt es sich um ein Schutzgas-Schweißwerkzeug. Anstatt eines mit einem Energiestrahl arbeitenden Schweiß- oder Lötwerkzeugs sind grundsätzlich aber auch Schweiß- oder Lötwerkzeuge verwendbar, die auf andere Weise schweißen oder löten.

Handelt es sich bei dem Schweiß- oder Lötwerkzeug um eines, das die für die Verbindung erforderliche Wärme mittels eines Energiestrahls erzeugt, sind das Bördelglied und das Schweiß- oder Lötwerkzeug an dem Werkzeugkopf vorzugsweise so angeordnet, dass die bei dem Bördeln von dem Bördelglied lokal ausgeübte Druckkraft und der Energiestrahl in einem geringen Abstand nebeneinander den zu erzeugenden Verbund beaufschlagen. Der Abstand ist so gewählt, dass die von dem Bördelglied ausgeübte Druckkraft am Schweiß- oder Lötort noch sicher dafür sorgt, dass die Bauteile gegeneinander gepresst sind und nicht auseinanderklaffen können. Der Abstand beträgt in Längsrichtung der Bördelkante gesehen vorzugsweise wenigstens 1 mm und vorzugsweise höchstens 6 mm. Aus dem genannten Abstandsbereich sind Werte von wenigstens 2 mm und höchstens 4 mm und aus diesem engeren Bereich wiederum Werte um 3 mm besonders vorteilhaft. Ist das Bördelglied eine Bördelrolle, liegt es auf der Hand, dass der Energiestrahl der Bördelrolle nachläuft. Der Abstand wird dabei zwischen dem Zentrum des Energiestrahls am Auftreffort und einem dem Zentrum nächsten Ort der Drucklinie oder des schmalen Druckstreifens gemessen, in dem die Bördelrolle Kontakt mit dem Flansch hat. Ist das Bördelglied ein Gleitstück und hat das Gleitstück mit dem Flansch nicht nur Kontakt längs einer Drucklinie oder eines in Längsrichtung der Bördelkante schmalen Druckstreifens, wird der Abstand zwischen dem Zentrum des Energiestrahls und einer nächsten Stelle des Gleitstücks gemessen, bei der der Flansch bis in seine Fügeposition umgelegt ist, in der er mit dem Innenblech verschweißt oder verlötet wird. Das vorstehend in Bezug auf den Energiestrahl Gesagte gilt sinngemäß auch für Schweiß- oder Lötwerkzeuge, die auf andere Weise die für das Schweißen oder Löten erforderliche Energie in den Fügebereich einbringen.

Insbesondere für die Erzeugung einer Kehlnaht ist es von Vorteil, wenn der Werkzeugkopf über ein Nahtverfolgungssystem verfügt, mit dem das Schweiß- oder Lötwerkzeug der am Ende des Überlappstoßes bestehenden Stoßfuge, in der die Naht erzeugt werden soll, nachgeführt wird. Das Nahtverfolgungssystem umfasst einen Sensor für eine Abtastung der Stoßfuge, vorzugsweise für eine taktile Abtastung, und einen Ausgleichsmechanismus, der Bewegungen des Schweiß- oder Lötwerkzeugs relativ zu dem Bördelglied ermöglicht. Der Ausgleichsmechanismus kann so gestaltet sein, dass er nur translatorische Ausgleichsbewegungen oder nur rotatorische Ausgleichsbewegungen oder bevorzugt translatorische und rotatorische Ausgleichsbewegungen zulässt. Das Schweiß- oder Lötwerkzeug kann über den Ausgleichsmechanismus an dem Werkzeugkopf relativ zu dem Bördelglied in der gemeinsamen Arbeitsposition somit einen oder mehrere Freiheitsgrade der Beweglichkeit aufweisen. Bevorzugterweise wird das Schweiß- oder Lötwerkzeug in Bezug auf den einzigen oder die mehreren Freiheitsgrade jeweils mittels Federkraft in einer neutralen Position und Ausrichtung gehalten. Für den Ausgleich kann das Schweiß- oder Lötwerkzeug insbesondere um eine Achse schwenkbeweglich sein, die während eines Arbeitslaufs der Vorrichtung parallel zu der Längsrichtung der Bördelkante am momentanen Wirkort ist. Vorteilhaft ist alternativ oder bevorzugt zusätzlich, auch eine Beweglichkeit auf die Stoßfuge zu und von der Stoßfuge weg.

Wegen der räumlichen Nähe, die das Bördelglied zu dem Schweiß- oder Lötwerkzeug hat, ist es vorteilhaft, wenn an dem Werkzeugkopf eine Reinigungseinrichtung angeordnet ist, mit der das Bördelglied während des Bördelns und Schweißens oder Lötens gereinigt werden kann. Die Reinigungseinrichtung kann eine Bürste oder einen Schaber oder eine Einrichtung zur Beaufschlagung des Bördelglieds mit Trockeneis umfassen.

Vorteilhafte Merkmale werden auch in den Unteransprüchen und deren Kombinationen offenbart.

Nachfolgend werden Ausführungsbeispiele der Erfindung anhand von Figuren erläutert.
- Figuren 1-4: einen Falzprozess für das Fügen von Blechen,
- Figur 5: einen Blechverbund eines ersten Ausführungsbeispiels,
- Figur 6: einen Blechverbund eines zweiten Ausführungsbeispiels,
- Figur 7: eine erfindungsgemäße Fügevorrichtung mit einem Bördelglied und einem Schweißwerkzeug bei der Ausführung eines erfindungsgemäßen Fügeverfahrens,
- Figur 8: einen Fügebereich der Figur 7 in vergrößerter Darstellung und mit einem anderen Bördelglied,
- Figur 9: einen erfindungsgemäßen Blechverbund eines dritten Ausführungsbeispiels,
- Figur 10: die erfindungsgemäße Fügevorrichtung bei der Erzeugung des Blechverbunds des dritten Ausführungsbeispiels,
- Figur 11: die erfindungsgemäße Fügevorrichtung im Fügebereich,
- Figur 12: einen Blechverbund eines vierten Ausführungsbeispiels,
- Figur 13: einen Blechverbund eines fünften Ausführungsbeispiels,
- Figur 14: den Blechverbund des dritten Ausführungsbeispiels,
- Figur 15: einen erfindungsgemäßen Blechverbund eines sechsten Ausführungs-beispiels,
- Figur 16: einen Blechverbund eines siebten Ausführungsbeispiels,
- Figur 17: einen Blechverbund eines achten Ausführungsbeispiels,
- Figur 18: einen Blechverbund eines neunten Ausführungs-beispiels,
- Figur 19: einen Blechverbund eines zehnten Ausführungs-beispiels,
- Figur 20: einen erfindungsgemäßen Blechverbund eines elften Ausfiihrungsbeispiels und
- Figur 21: einen erfindungsgemäßen Blechverbund eines zwölften Ausführungs-beispiels.

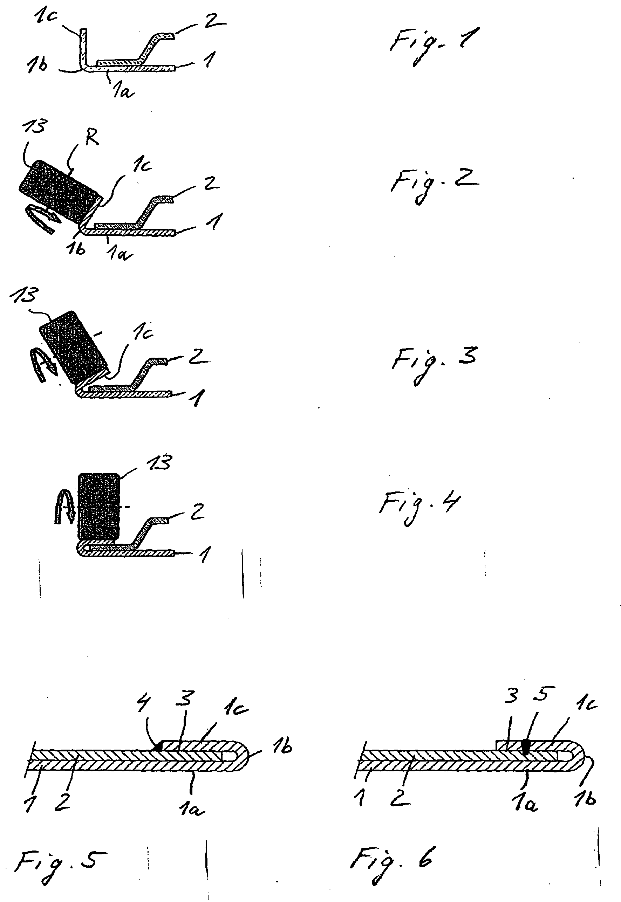

Die Figuren 1 bis 4 zeigen einen Verfahrensablauf bei der Herstellung eines Blechverbunds durch Rollbördeln. Dargestellt ist jeweils in einem Querschnitt ein Randbereich eines Innenblechs 1 und eines Außenblechs 2, die mittels einer Spannvorrichtung relativ zueinander in einer Fügeposition fixiert sind. Die Bleche 1 und 2 haben in einem vorgelagerten Prozess der plastischen Umformung, beispielsweise Tiefziehen, ihre für die jeweilige Verwendung gewünschte Endform mit Ausnahme der für das Verbinden noch erforderlichen nachgelagerten Umformung erhalten. Beide Bleche 1 und 2 sind dreidimensional verwölbte Strukturen, die im dargestellten Fügebereich je einen für die Falzverbindung geeigneten Flansch aufweisen, wobei das Innenblech 2 mit seinem Flansch von der Spannvorrichtung flächig gegen das Außenblech 1 gedrückt wird. Das Außenblech 1 geht in einem äußeren Blechbereich la über eine scharfe Biegung 1b in einen Flansch 1c über. Der Flansch 1c wird in mehreren Bördelschritten sukzessive in Richtung auf den Flansch des Innenblechs 2 vollständig umgelegt. Die Biegung 1b bildet bei dem Bördeln jeweils eine Bördelkante und wird im Folgenden daher als Bördelkante 1b bezeichnet. Das Umlegen erfolgt mit einer Bördelrolle 13, die um eine Drehachse R an einem Werkzeugkopf drehbar gelagert ist. Im Ausführungsbeispiel wird der Flansch 1c in drei Schritten um insgesamt 90° umgelegt.

Figur 2 zeigt im ersten Bördelschritt, bei dem die in Längsrichtung der Bördelkante 1b auf dem Flansch 1c abrollende Lauffläche der Bördelrolle 13 in einem Winkel von etwa 30° zu dem noch nicht gebördelten Flansch 1c angestellt ist, so dass der Flansch 1c bei dem Abrollen um diesen Anstellwinkel auf den Flansch des Innenblechs 2 zu umgelegt wird. In Figur 3 ist die Lauffläche der Bördelrolle 13 wiederum in einem Winkel von etwa 30° zu dem im ersten Bördelschritt umgelegten Flansch 1c angestellt, so dass bei dem zweiten Arbeitslauf der Flansch 1c um weitere 30° umgelegt wird. Im letzten Arbeitslauf, den Figur 4 zeigt, wird der Flansch 1c um weitere 30° und somit vollständig umgelegt und dabei von der Bördelrolle 13 gegen den Flansch des Innenblechs 2 gepresst. Die Bördelrolle 13 dient im letzten Bördelschritt als Fertigbördelrolle. Im letzten Arbeitslauf bzw. Bördelschritt ist die Bördelrolle 13 vorzugsweise über eine Federkraft an dem Werkzeugkopf abgestützt, wobei die Federkraft in Richtung auf den Flansch 1c wirkt. In den beiden vorhergehenden Schritten ist die Bördelrolle 13 am Werkzeugkopf vorzugsweise nicht nachgiebig abgestützt, um jeweils eine definierte Flanschgeometrie zu erhalten. Nach Fertigstellung der Falzverbindung, wie Figur 4 sie zeigt, bildet das Außenblech 1 im Bereich des Flansches 1c eine U-förmige Tasche in der der Verbindungsflansch des Innenblechs 2 fest zwischen dem äußeren Blechbereich la und dem Flansch 1c je mit Flächenpressung geklemmt ist. Vor dem Falzen wird in den Falzbereich eine Dichtungsmasse eingebracht, um Spaltkorrosion zwischen den gegeneinander geklemmten Blechen 1 und 2 zu verhindern und im Falle dynamischer Beanspruchung durch Relativbewegungen erzeugte Geräusche zumindest zu dämpfen.

Figur 5 zeigt den Fügebereich eines Blechverbunds eines ersten Ausführungsbeispiels. Den Blechverbund bilden ein Außenblech 1 und ein Innenblech 2, die mittels einer Falzverbindung und einer Schweißverbindung form-, reib- und stoffschlüssig miteinander verbunden sind. Die Falzverbindung stimmt geometrisch mit der vorstehend beschriebenen überein. Sie kann insbesondere auch wie anhand der Figuren 1 und 4 beispielhaft erläutert hergestellt werden. Die Schweißverbindung wird von einer Kehlnaht 4 gebildet, die von einem Schweißwerkzeug erzeugt wird, wenn der Flansch 1c bis gegen das Innenblech 2 vollständig umgelegt ist. Der vollständig umgelegte Flansch 1c bildet mit dem Flansch des Innenblechs 2 im Fügebereich, d.h. in der Tasche des Außenblechs 1, einen Überlappstoß 3, in dem der Flansch 1c und der Flansch des Innenblechs 2 flächig aufeinander liegen, wobei im Überlappstoß 3 vorzugsweise Dichtungsmasse vorhanden ist. Die Kehlnaht 4 verläuft am Überlappstoß 3, d.h. längs des freien äußeren Rands des Flansches 1c.

Die Schweißnaht 4 kann in einem von dem Fertigbördelschritt separaten Arbeitslauf eines Schweißwerkzeugs erzeugt werden. Vorzugsweise führen das Bördelwerkzeug und das Schweißwerkzeug jedoch bei dem Fertigbördeln, wie es in Figur 4 dargestellt ist, einen Arbeitslauf gemeinsam aus, bei dem das Bördelwerkzeug mit der Bördelrolle 13 eine Andrückeinrichtung für das Schweißwerkzeug bildet, indem die Naht 4 während des Arbeitslaufs an dem Ort erzeugt wird, an dem die Bördelrolle 13 eine für das Schweißen ausreichende Druckkraft auf dem Flansch 1c ausübt, so dass der freie Rand des Flansches 1c während des Schweißens von der Bördelrolle 13 fest gegen das Innenblech 2 gedrückt wird und in diesem Bereich nicht von dem Innenblech 2 abklaffen kann. Als Schweißwerkzeug wird ein Laserschweißgerät verwendet, das den Fügebereich am momentanen Wirkort lokal aufschmilzt und während des Arbeitslaufs dem momentanen Schmelzbereich Schweißmaterial zuführt. Die Schweißnaht 4 sorgt im Fügebereich für eine absolut feste Verbindung der Bleche 1 und 2 und verhindert dort Relativbewegungen zwischen den Blechen 1 und 2, so dass unter dynamischer Belastung keine Geräusche mehr entstehen können. Ferner versiegelt die Schweißnaht 4 den Fügebereich unmittelbar an dem äußeren Ende des Überlappstoßes 3, übernimmt also auch Dichtfunktion. Dichtungsmasse ist daher im Fügebereich, d.h. in der Tasche des Außenblechs 1, nicht mehr unumgänglich erforderlich, obgleich auch der erfindungsgemäße Blechverbund bevorzugterweise im Fügebereich Dichtungsmasse zwischen den Blechen 1 und 2 enthält.

Figur 6 zeigt einen Blechverbund eines zweiten Ausführungsbeispiels, dass sich von dem Blechverbund des ersten Ausführungsbeispiels nur hinsichtlich der Schweißverbindung unterscheidet. Im zweiten Ausführungsbeispiel verläuft eine Schweißnaht 5 im Überlappstoß 3 zumindest im Wesentlichen parallel zu der Bördelkante 1b. Die Schweißnaht 5 ist eine I-Naht. Zur Herstellung der Schweißnaht 5 fahrt ein Laserschweißwerkzeug nach dem Fertigbördeln oder vorzugsweise wie anhand des ersten Ausführungsbeispiels geschildert gleich während des Fertigbördelns den Flansch 1c ab und schmilzt diesen in Längsrichtung der Bördelkante 1b kontinuierlich fortschreitend jeweils lokal auf. Die Vorwärtsgeschwindigkeit und die Laserleistung sind so aufeinander abgestimmt, dass der Laserstrahl auch das unter dem Flansch 1c liegende Innenblech 2 lokal aufschmilzt. Der Schmelzbereich durchsetzt somit den Flansch 1c und reicht bis in das Innenblech 2 hinein. Hinter dem Laserstrahl bildet sich nach dem Erstarren die feste Schweißverbindung. Die Herstellung der Schweißnaht 5 stellt an den Schweißprozess geringere Anforderungen hinsichtlich der Präzision des Nahtverlaufs und somit der Führung des Schweißwerkzeugs. Die Schweißnaht 4 am Ende des Überlappstoßes 3 sorgt jedoch für eine Abdichtung des gesamten Fügebereichs und trägt daher mehr zur Verhinderung von Spaltkorrosion bei. Ein weiterer Vorteil der am Ende des Überlappstoßes 3 gebildeten Schweißnaht 4 ist das Materialeinsparungspotential, da im Querschnitt gesehen die Länge des Flansches 1c gegenüber dem des zweiten Ausführungsbeispiels verkürzt und somit bei dem Außenblech 1 Material eingespart werden kann.

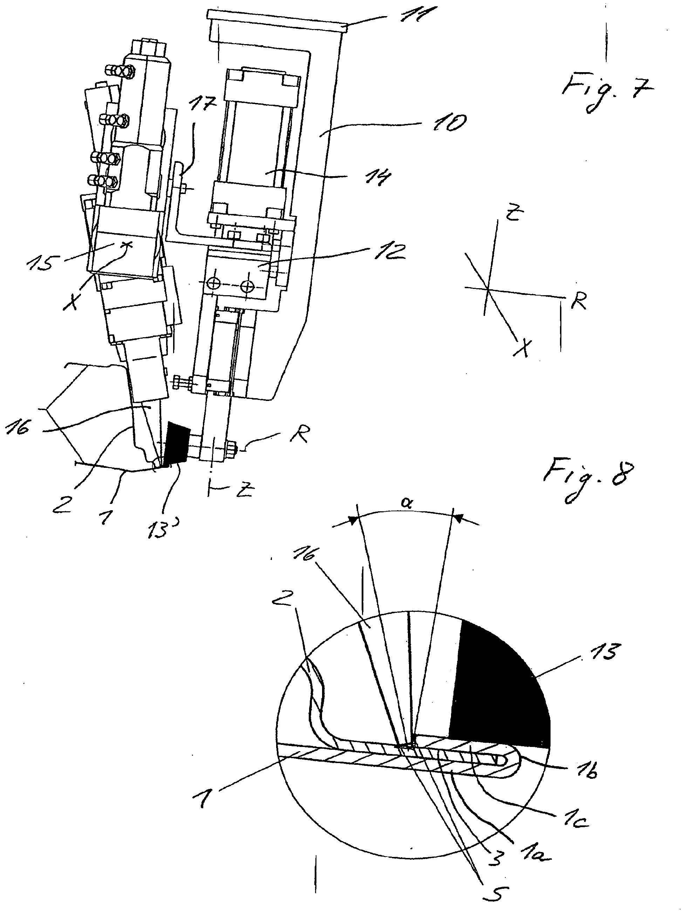

Figur 7 zeigt eine Vorrichtung, mit der im gleichen Arbeitslauf ein Falz geschlossen, d.h. eine Falzverbindung fertig gestellt, und im Falzbereich geschweißt werden kann. Die Vorrichtung weist einen Werkzeugkopf 10 auf, der ein Gestell für ein Bördelwerkzeug 12 und ein Schweißwerkzeug 15, im Ausführungsbeispiel ein Laserschweißwerkzeug, bildet. Der Werkzeugkopf 10 besitzt ferner einen Anschluss 11 für die Befestigung an einem im Raum beweglichen Aktor. Den Aktor kann insbesondere das Ende eines Roboterarms bilden. Von den Blechen 1 und 2 ist wieder nur der Fügebereich und dessen unmittelbare Umgebung dargestellt. Das Innenblech 2 ragt bereits nahe des Flansches 1c von dem Außenblech 1 weg auf, wodurch die Zugänglichkeit für das Schweißwerkzeug 15 erheblich beeinträchtigt wird. Der am Innenblech 2 für das Fügen geformte Flansch ist somit sehr kurz. Um den Schweißstrahl 16 dennoch an den gewünschten Ort im Fügebereich richten zu können, wird anstatt einer kreiszylindrischen Bördelrolle eine konische Bördelrolle 13' zum Fertigbördeln verwendet. Das Schweißwerkzeug 15 kann dadurch zum Fügebereich steiler angestellt werden. Die Bördelrolle 13' ist um ihre Drehachse R drehbar und ferner gegen eine rückstellende Federkraft längs einer zu der Drehachse R und der lokalen Längsrichtung X der Bördelkante 1b senkrechten Achse Z linear beweglich am Werkzeugkopf 10 abgestützt. Die für das Fertigbördeln gewünschte Elastizität der Abstützung wird mittels einer Pneumatikeinheit 14 erhalten, indem die Bördelrolle 13' an einer Kolbenstange der Pneumatikeinheit 14 um die Drehachse R drehbar befestigt ist. Über die Drehbeweglichkeit und die translatorische Beweglichkeit längs der Achse Z hinaus weist die Bördelrolle 13' relativ zu dem Werkzeugkopf 10 keinen weiteren Freiheitsgrad mehr auf. Die Bewegungsachse Z ist in Figur 7 neben der Vorrichtung in einem relativ zu dem Werkzeugkopf 10 ortsfesten kartesischen Koordinatensystem eingetragen. Die Drehachse R bildet eine weitere Achse dieses Koordinatensystems. Die dritte Achse X fällt während des Arbeitslaufs mit der Längsrichtung der Bördelkante 1b am momentanen Wirkort der Bördelrolle 13' zusammen.

Das Laserwerkzeug 15 ist über einen Verbindungsflansch 17 ebenfalls fest mit dem Werkzeugkopf 10 verbunden, d.h. der Verbindungsflansch 17 wird als ein festes Gestellteil des Werkzeugkopfs 10 verstanden. Durch die feste Verbindung wird sichergestellt, dass das Laserwerkzeug 15 in einer definierten Position und Ausrichtung relativ zu der Bördelrolle 13' angeordnet ist. Innerhalb dieser festen Anordnung sind einem Laserkopf des Laserwerkzeugs 15 jedoch Ausgleichsbewegungen relativ zu der Bördelrolle 13' möglich, mit denen der Laserkopf insbesondere Unebenheiten im Fügebereich ausgleichen kann. Der Laserkopf oder das gesamte Laserwerkzeug ist hierfür über einen Ausgleichsmechanismus an dem Werkzeugkopf 10 abgestützt. Der Ausgleichsmechanismus ermöglicht Schwenkbewegungen um die X-Achse und Translationsbewegungen auf den Fügebereich zu und von dem Fügebereich weg. Der Ausgleichsmechanismus lagert den Laserkopf oder das Laserwerkzeug in Bezug auf diese beiden Freiheitsgrade der Beweglichkeit um eine Neutralposition je gegen eine Federkraft hin und her schwenkbar und ebenfalls jeweils gegen eine rückstellende Federkraft translatorisch hin und her bewegbar.

Figur 8 zeigt den Fügebereich vergrößert. Von der Vorrichtung sind lediglich die Bördelrolle, die in Figur 8 abweichend von Figur 7 als kreiszylindrische Bördelrolle 13 dargestellt ist, und der Laserstrahl 16 zu erkennen. Die Bördelrolle 13 könnte durch die Bördelrolle 13' ersetzt werden, wodurch sich allerdings der Neigungswinkel α des Laserstrahls 16 ändern würde. Der Neigungswinkel α wird zwischen einer im Wirkort zu dem Flansch 1c senkrechten Geraden und einer Strahlmittelachse des Laserstrahls 16 gemessen. Im Ausführungsbeispiel wird mittels der Vorrichtung eine Kehlnaht 4 erzeugt, wie sie für das erste Ausführungsbeispiel eines Blechverbunds anhand der Figur 5 beschrieben wurde. Für die Herstellung der Kehlnaht 4 wird der Laserstrahl 16 auf das Ende des Überlappstoßes 3 gerichtet. Der Neigungswinkel α sollte wenigstens 5° betragen, damit nicht nur das Innenblech 2, sondern auch der Rand des Flansches 1c aufgeschmolzen wird. Eine derartige Wahl des Neigungswinkels α stellt sicher, dass sich der Schmelzbereich S wie in Figur 8 gezeigt über den gesamten Eckbereich der Stoßfuge erstreckt, so dass sich das während des Schweißens zugeführte Schweißmaterial gleichmäßig mit dem Flansch 1c und dem Innenblech 2 verbindet. Bei Verwendung der konischen Bördelrolle 13' ergibt sich hieraus ein für das Schweißen noch günstiger oberer Wert für die Konizität. Danach beträgt die Konizität der Bördelrolle 13', d.h. die Neigung der Lauffläche der Bördelrolle 13' zur Drehachse R vorzugsweise höchstens 15°.

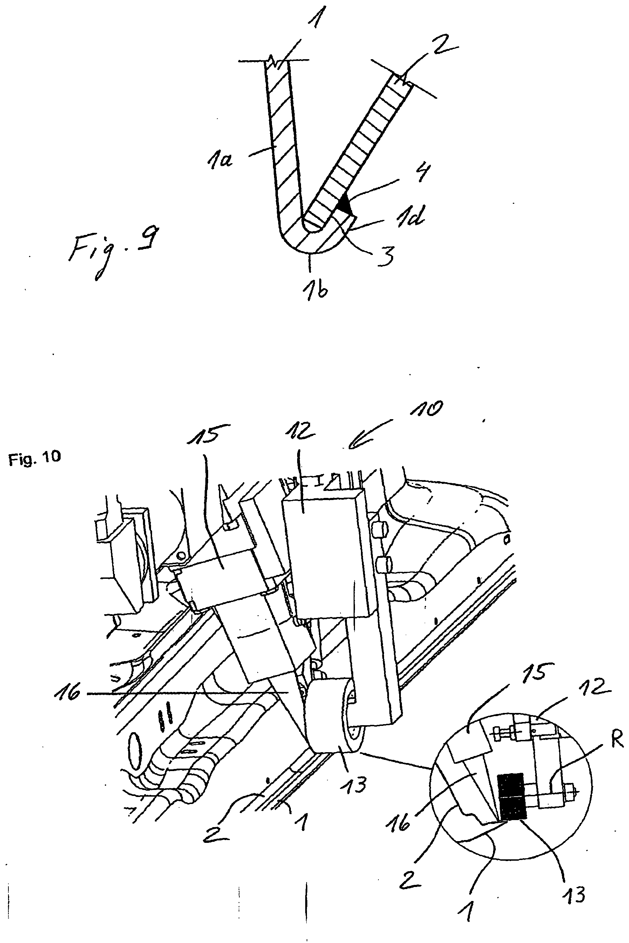

Figur 9 zeigt einen erfindungsgemäßen Blechverbund eines dritten Ausführungsbeispiels. Der Blechverbund unterscheidet sich von dem ersten und zweiten Ausführungsbeispiel durch die Form der im Fügebereich durch Bördeln geformten Tasche. Der zur Unterscheidung mit 1d bezeichnete Flansch des Außenblechs 1 wird bei dem Bördeln weniger weit umgelegt als im ersten und zweiten Ausführungsbeispiel. Der Flansch 1d wird bei dem Bördeln in Richtung auf den über die Bördelkante 1b angrenzenden Blechbereich la nur soweit umgelegt, dass eine V-förmige Tasche erhalten wird, der Flansch 1d also nach dem Bördeln mit einer Neigung schräg zu dem Blechbereich 1a weist. Der Neigungswinkel ist vorzugsweise so gewählt, dass der Flansch 1d in einem oder höchstens zwei Bördelschritten in die gezeigte Endform umgelegt werden kann, falls bei dem Bördeln wie anhand der Figur 1 lediglich beispielhaft angenommen, von einem Außenblech 1 ausgegangen wird, bei dem der Flansch 1d vor dem Bördeln bereits in etwa rechtwinklig von dem Blechbereich 1a abragt. Das Innenblech 2 ragt mit seinem Flansch in die Tasche und mit seinem freien Flanschrand bis gegen die dem Flansch 1d zugewandte Innenseite des Blechbereichs 1a. Je nach Blechdicke kann das Innenblech 2 auch bis in den Grund der Tasche ragen.

Figur 10 zeigt die erfindungsgemäße Vorrichtung mit kreiszylindrischer Bördelrolle 13 beim Bördeln und zeitgleichen Schweißen eines Blechverbunds mit dem in Figur 9 dargestellten Fügebereich. Der Blechverbund kann beispielsweise eine Tür für ein Automobil bilden. Der Fügebereich ist zusammen mit dem dort wirkenden Bördel- und Laserwerkzeug 12 und 15 auch im Detail dargestellt. Der Blechverbund entspricht mit Ausnahme des Fügebereichs dem Blechverbund der Figuren 7 und 8. Wie anhand der Detaildarstellung der Figur 10 erkennbar ist, wird durch die Form des Innenblechs 2, dessen Flansch in der Fügeposition zu dem Blechbereich 1a geneigt ist, und das daraus folgend nicht vollständige Umlegen des Flansches 1d die Zugänglichkeit für das Laserwerkzeug 15 im Fügebereich verbessert. Es kann mit der kreiszylindrischen Bördelrolle 13 fertiggebördelt werden, während gleichzeitig der Laserstrahl 16 mit einem für das Aufschmelzen des Eck bzw. Schmelzbereichs S günstigen Neigungswinkel α (Figur 8) auf den Fügebereich gerichtet werden kann. Die Ausrichtung des Flansches des Innenblechs und die sich daraus ergebende Form des Flansches 1d, d.h. der zwischen dem Flansch 1d und dem Blechbereich 1a gebildeten Tasche ist, wie das Ausführungsbeispiel zeigt, insbesondere dann von Vorteil, wenn das Innenblech 2 bereits nahe bei dem Fügebereich in Bezug auf das gegenüberliegende Außenblech 1 aufragt und dadurch den für das Laserwerkzeug 15 zwischen der Bördelrolle 13 oder 13' und dem aufragenden, im Ausführungsbeispiel wannenförmigen Bereich des Innenblechs 2 erheblich einschränkt.

Vor dem Bördeln und Schweißen werden das Außenblech 1 und das Innenblech 2 in der in Figur 10 gezeigten Fügeposition relativ zueinander fixiert, wobei der umlaufende Flansch des Innenblechs 2 gegen den an die Bördelkante 1b grenzenden Blechbereich la gedrückt wird. Im Unterschied zu dem ersten und dem zweiten Ausführungsbeispiel liegt der Flansch des Innenblechs 2 in der Fügeposition nicht flächig auf dem gegenüberliegenden Blechbereich 1a an, sondern hat umlaufend im Wesentlichen , nur Linienberührung, wie dies die Detaildarstellung der Figur 10 und insbesondere die Figur 9 zeigen. Die Linienberührung oder generell ein Kontakt der Bleche 1 und 2 ist für das Bördeln von Vorteil, da hierdurch ein Nachgeben des Innenblechs 2 verhindert oder zumindest im Wesentlichen verhindert wird, wenn der Flansch 1c oder 1d zur Bildung des Überlappstoßes 3 bis gegen den Flansch des Innenblechs 2 umgelegt wird. Figur 10 zeigt die Fügevorrichtung bei diesem letzten von mehreren Bördelschritten oder dem vorzugsweise insgesamt nur einen Bördelschritt. Um für das Fügen mit einem möglichst kurzen Flansch 1d auszukommen, wird die Schweißnaht 4 wieder wie im ersten Ausführungsbeispiel als Kehlnaht am Überlappstoß 3 erzeugt.

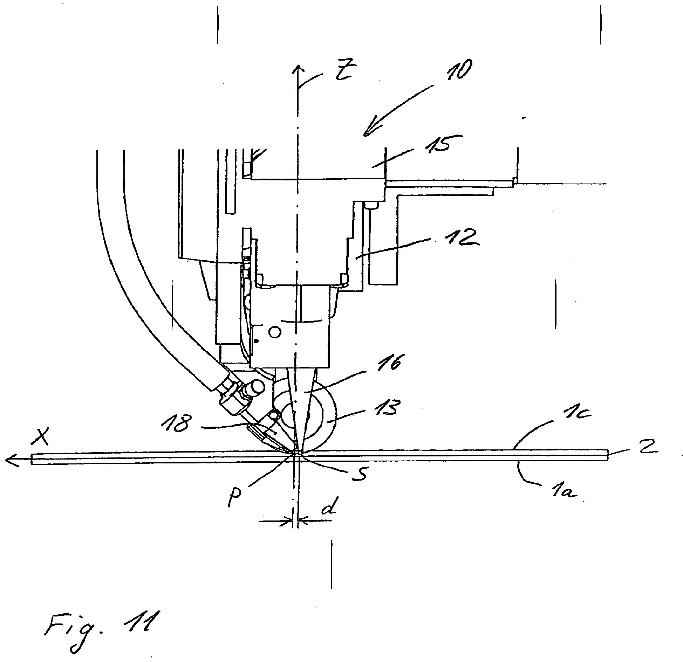

Figur 11 zeigt die Fügevorrichtung während des Arbeitslaufs in einer Sicht auf eine Längsschnittebene durch den Fügebereich des Blechverbunds 1, 2 des ersten Ausführungsbeispiels, in dem der Flansch 1c und der gegenüberliegende Blechbereich 1a des Außenblechs 1 eine U-förmige Tasche bilden. Die Laufrichtung der Fügevorrichtung ist mit einem Richtungspfeil auf der X-Achse des Werkzeugkopfs 10 eingetragen. Der Laserstrahl 16 ist auf den Schmelzbereich S gerichtet, während die Bördelrolle 13 auf einer Drucklinie P, die in der Praxis ein schmaler Druckstreifen ist, auf den Flansch 1c und über diesen auf das Innenblech 2 und den Blechbereich 1a des Außenblechs 1 wirkt. Der in erster Näherung punktförmige Schmelzbereich S fährt der Drucklinie P wegen der beschriebenen Anordnung des Bördelwerkzeugs 12 und des Laserwerkzeugs 15 am gleichen Werkzeugkopf 10 während des Arbeitslaufs in einem geringen Abstand d nach. Handelt es sich bei dem Blechverbund wie im Beispielfall angenommen um eine Tür oder ein anderes Anbauteil oder auch ein Karosserieteil eines Automobils, so beträgt der Abstand d bei den für derartige Blechverbunde typischen Blechdicken und der für Bördelwerkzeuge üblichen Vorwärtsgeschwindigkeiten sowie der angepassten Laserleistung vorzugsweise etwa 3mm. Der Abstand d ist ungeachtet dieser speziellen Anwendung so gewählt, dass der von der Bördelrolle 13 auf den Flansch 1c ausgeübte Druck im Schmelzbereich S noch ausreichend groß ist, um den Flansch 1c an seinem äußeren, einen Teil des Schmelzbereichs S bildenden Rand fest gegen das Innenblech 2 zu drücken, so dass der Flansch 1c im Schmelzbereich S nicht von dem Innenblech 2 abklafft und eine saubere Schweißnaht 4 in Form einer Kehlnaht erzeugt werden kann.

Um etwaige. Unebenheiten und sonstige Unregelmäßigkeiten auszugleichen, die längs der Bördelkante 1b im momentanen Schmelzbereich S auftreten können, verfügt - das Laserwerkzeug 15 über einen taktilen Sensor 18, der mit dem Laserkopf unbeweglich verbunden ist. Der taktile Sensor 18 ist ein schlanker Finger, der in Laufrichtung X vor dem Schmelzbereich S das Ende des Überlappstoßes zwischen dem Flansch 1c und dem Innenblech 2 abtastet und wegen der festen Verbindung mit dem Laserkopf diesen im Rahmen seiner Schwenkbeweglichkeit und translatorischen Beweglichkeit nachführt.

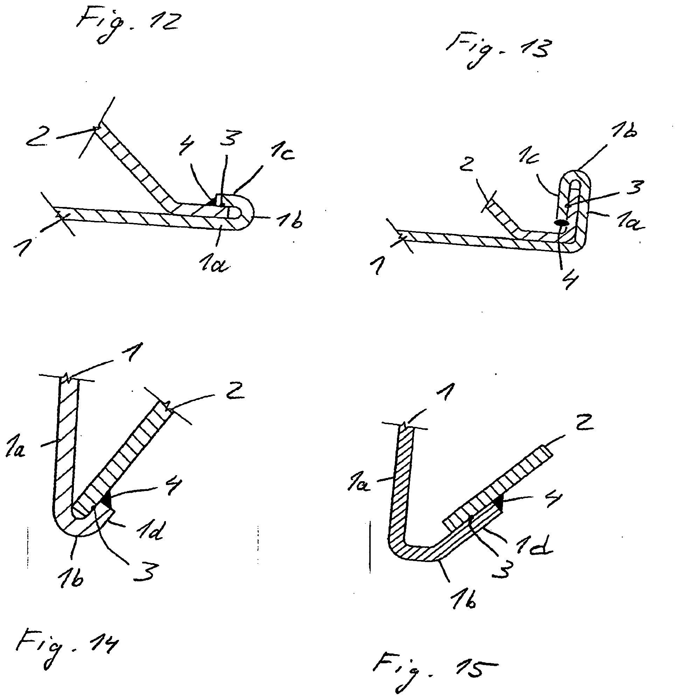

Figur 12 zeigt den Fügebereich eines Blechverbunds eines vierten Ausfiihrungsbeispiels, der dem Fügebereich des ersten Ausführungsbeispiels mit einer Abweichung entspricht. Gegenüber dem in Figur 5 abgebildeten Fügebereich sind der Flansch 1c und dementsprechend der Überlappstoß 3 verkürzt. Durch die Verkürzung verkürzt sich entsprechend auch der potentiell durch Spaltkorrosion gefährdete Bereich, insbesondere wird jedoch bei dem Außenblech 1 Material eingespart. Die Verkürzung der Länge des Überlappstoßes 3 wirkt sich wegen der Schweißverbindung nicht oder nicht nennenswert auf die Steifigkeit und Festigkeit der Fügeverbindung aus.

Figur 13 zeigt einen Blechverbund eines fünften Ausführungsbeispiels mit einem Fügebereich, der dem ersten Ausführungsbeispiel entspricht, soweit unmittelbar nur die Falzverbindung und die Schweißverbindung betroffen sind. Allerdings ist die Geometrie des Blechverbunds insgesamt ungünstiger als bei dem ersten und dem vierten Ausführungsbeispiel (Figuren 5 und 12), da die Zugänglichkeit für das Bördelwerkzeug und insbesondere die Zugänglichkeit für das Schweißwerkzeug aufgrund der Geometrie des Blechverbunds erheblich beeinträchtigt ist.

Figur 14 zeigt nochmals den Blechverbund des dritten Ausführungsbeispiels. Figur 15 zeigt im Vergleich hierzu einen erfindungsgemäßen Blechverbund eines sechsten Ausführungsbeispiels, der sich von dem Blechverbund des dritten Ausführungsbeispiels dadurch unterscheidet, dass das Innenblech 2 nicht bis auf Anschlagkontakt mit dem Außenblech 1 in die zwischen dem Flansch 1d und dem Blechbereich 1a gebildete Tasche hineinragt. Ein weiterer Unterschied besteht darin, dass das Außenblech 1 im Bereich der Tasche zweimal abknickt. Die Bördelkante 1b ist in einem geringen Abstand von der unmittelbar in den Blechbereich 1a führenden weiteren scharfen Biegung abgesetzt. Ein letzter, dritter Unterschied besteht in der gegenüber dem dritten Ausführungsbeispiel größeren Länge des Flansches 1d und des Überlappstoßes 3.

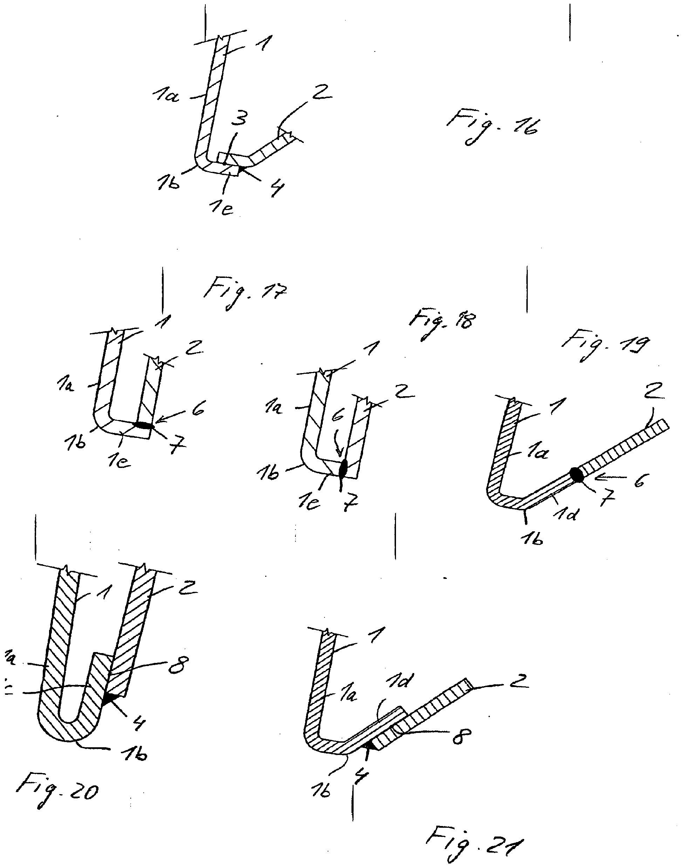

Figur 16 zeigt einen Blechverbund eines siebten Ausführungsbeispiels. Im siebten Ausführungsbeispiel ist der zur Unterscheidung mit 1e bezeichnete Flansch in Richtung auf den Blechbereich 1a, von dem er über die Bördelkante 1b abragt, weniger weit umgelegt, so dass er keine Richtungskomponente mit dem angrenzenden Blechbereich 1a gemeinsam hat und insbesondere mit diesem keine Tasche bildet. Bei der Herstellung der Falzverbindung wird der Flansch le wie anhand der anderen Ausführungsbeispiele beschrieben mittels des Bördelwerkzeugs 12 um die Bördelkante 1b umgelegt, so dass er mit dem über die Bördelkante angrenzenden Blechbereich 1a einen Winkel von beispielsweise 90° wie im Ausführungsbeispiel gezeigt oder einen Winkel größer als 90° einschließt. Der Flansch le kann vor dem Umlegen den Blechbereich la einfach nur gerade verlängern. Die Schweißnaht 4 wird wie im ersten Ausführungsbeispiel mittels des Schweißwerkzeugs 15 als Kehlnaht am Überlappstoß 3 erzeugt.

Die Figuren 17 bis 19 zeigen drei weitere Ausführungsbeispiele für Blechverbunde. Im Unterschied zu den Blechverbunden der bislang beschriebenen Ausführungsbeispiele ist der Stoß zwischen den Blechen 1 und 2 nicht als Überlappstoß, sondern als stumpfer Stoß 6 gebildet. Die Schweißnaht 7, die vorzugsweise den gesamten Bereich des Stoßes 6 erfasst, kann beispielsweise als V-Naht erzeugt werden. In den Ausführungsbeispielen der Figuren 17 und 18 ist der Flansch 1e entsprechend dem Ausführungsbeispiel der Figur 16 umgelegt, so dass er mit dem Blechbereich 1a einen Winkel von 90° oder mehr einschließt. Im Ausführungsbeispiel der Figur 19 ist der Flansch 1d in einem oder mehreren Bördelschritten zwar nur um einen Winkel von höchstens 90° um die Bördelkante 1b umgelegt worden, das Blech weist jedoch bereits vor dem Bördeln einen abgekanteten Flansch auf, in dem durch das erfindungsgemäße Bördeln nochmals der Flansch 1d umgelegt wurde. Im Ergebnis wird wieder eine Tasche erhalten mit allerdings zwei Kanten, zum einen der bereits zuvor geformten Kante und zum anderen der Bördelkante 1b.

Im Ausführungsbeispiel der Figur 17 wird der Flansch 1e mit einer Innenseite gegen eine Stirnseite des Blechs 2 gelegt. Im Ausführungsbeispiel der Figur 18 drückt das Innenblech 2 bei dem Schweißen mit einer Innenseite gegen die Stirnseite des Flansches 1e. Im Ausfuhrungsbeispiel der Figur 19 werden der Flansch 1d und das Blech 2 je mit ihren Stirnseiten gegeneinander gedrückt und in einem derart gespannten Zustand miteinander verschweißt.

Figur 20 zeigt ein Ausführungsbeispiel, in dem die Bleche 1 und 2 mittels einer Schweißnaht 4 miteinander verbunden sind, die sich längs der Außenseite des Flansches 1c erstreckt. Der Flansch 1c bildet an seiner Außenseite mit dem Blech 2 einen Überlappstoß, der zur Unterscheidung von dem Überlappstoß 3 an der Innenseite des Flansches 1c mit dem Bezugszeichen 8 versehen ist. Der Flansch 1c bildet mit dem über die Bördelkante 1b angrenzenden Blechbereich 1a eine Tasche und ist daher in Anlehnung an die Ausführungsbeispiele der Figuren 5, 6, 12 und 13 mit 1c bezeichnet. Allerdings steckt das Blech 2 nicht in der so gebildeten Tasche, sondern bildet den Überlappstoß 8 wie bereits erwähnt mit der Außenseite des Flansches 1c.

Figur 21 entspricht hinsichtlich des Überlappstoßes und der Schweißnaht 4 dem Ausführungsbeispiel der Figur 20 und hinsichtlich der Form des Blechs im Bereich des Flansches 1d den Ausführungsbeispielen der Figuren 15 und 19, so dass auf die jeweiligen Ausführungen zu diesen Ausführungsbeispielen verwiesen wird.

Die Bördel-Schweißverbindungen der Figuren 5, 6 und 12 bis 19 können im gleichen Arbeitslauf der erfindungsgemäßen Vorrichtung mit vorlaufendem Bördelwerkzeug und nachlaufendem Schweißwerkzeug hergestellt werden. Bei den Verbindungen der Ausführungsbeispiele der Figuren 20 und 21 wird in einem separaten Bördelverfahren der jeweilige Flansch 1c oder 1d umgelegt, anschließend werden die Bleche 1 und 2 mit dem Überlappstoß 8 relativ zueinander fixiert, d.h. gespannt, und in einem nachfolgenden, separaten Arbeitslauf wird die jeweilige Schweißnaht 4 erzeugt.

### Bezugszeichen:

- 1: Außenblech
- 1a: äußerer Blechbereich
- 1b: Bördelkante
- 1c: Flansch
- 1d: Flansch
- 1e: Flansch
- 2: Innenblech
- 3: Überlappstoß
- 4: Schweißnaht
- 5: Schweißnaht
- 6: stumpfer Stoß
- 7: Schweißnaht
- 8: Überlappstoß
- 9: -
- 10: Werkzeugkopf
- 11: Anschluss
- 12: Bördelwerkzeug
- 13: Bördelglied
- 13': Bördelglied
- 14: Pneumatikeinheit
- 15: Schweiß-oder Lötwerkzeug
- 16: Energiestrahl
- 17: Verbindungsflansch
- 18: Sensor

- R: Drehachse
- X: Längsrichtung, Bewegungsrichtung
- Z: Druckachse
- α: Neigungswinkel

## Patentansprüche

1. Blechverbund, der Bestandteil eines beweglichen oder nicht beweglichen Anbauteils, nämlich einer Tür, eines Schiebedachs, einer Heckklappe, eines Kofferraumdeckels, einer Motorhaube oder eines angebauten Kotflügels für ein oder an einem Fahrzeug, oder Bestandteil einer Karosserie des Fahrzeugs ist, der Blechverbund umfassend:
a) ein Außenblech (1) mit einem durch Roll- oder Gleitbördeln um eine Bördelkante (1b) umgelegten Flansch (1c; 1d),
b) ein Innenblech (2), das mit dem Flansch (1c; 1d) einen Stoß (3; 8) bildet,
c) und eine an oder in dem Stoß (3; 8) erzeugte, die Bleche (1; 2) fest miteinander verbindende Schweiß- oder Lötnaht,
d) wobei das Außenblech (1) mit seinem Flansch (1c; 1d) eine Tasche bildet,
**dadurch gekennzeichnet, dass**
e1) das Innenblech (2) in die Tasche ragt, um mit dem Flansch (1d) einen Überlappstoß (3) an einer in Bezug auf die Tasche innenliegenden Seite des Flansches zu bilden, wobei der Flansch (1d) mit einer Neigung von einem zugewandt gegenüberliegenden Bereich (1a) des Außenblechs (1) weg weist, so dass sich die Tasche in Richtung auf einen die BördeLkante (1b) umfassenden Bördelgrund trichterförmig verengt,
e2) oder der Flansch (1c; 1d) und das Innenblech (2) einen Überlappstoß (8) an der von der Tasche abgewandten Außenseite des Flansches (1c; 1d) bilden und die Schweiß- oder Lötnaht eine Schweißnaht (4) ist, die sich längs der Außenseite des Flansches (1c; 1d) erstreckt.

2. Blechverbund nach dem vorhergehenden Anspruch, **dadurch gekennzeichnet, dass** die Schweiß- oder Lötnaht eine Kehlnaht (4) oder I-Naht (5) ist.

3. Blechverbund nach einem der vorhergehenden Ansprüche, **dadurch gekennzeichnet, dass** er Bestandteil einer Karosserie des Fahrzeugs, nämlich eines Dachs, eines Seitenteils, insbesondere Radhauses, oder einer Verbindung eines Dachs mit einem Seitenteil, ist.

4. Verfahren zum Fügen von Blechen, bei dem
a) ein Außenblech (1) und ein Innenblech (2) in einer Fügeposition relativ zueinander fixiert werden,
b) an dem Außenblech (1) in der Fügeposition mittels eines in Längsrichtung einer Bördelkante (1b) bewegten Bördelglieds (13; 13') ein Flansch (1c; 1d; 1e) um die Bördelkante (1b) umgelegt wird,
c) das Innenblech (2) in der Fügeposition mit dem Flansch (1c; 1d; 1e) einen Stoß (3; 6; 8) bildet
d) und die Bleche (1, 2) an oder in dem Stoß (3; 6; 8) durch Erzeugung einer Schweiß-oder Lötnaht (4; 5; 7) miteinander verbunden werden,
e) und die Schweiß- oder Lötnaht (4; 5; 7) mittels eines Schweiß- oder Lötwerkzeugs (15) erzeugt wird, das dem Bördelglied (13; 13') bei dem Umlegen des Flansches (1c; 1d; 1e) in Längsrichtung (X) der Bördelkante (1b) folgt,
f) wobei das Bördelglied (13; 13') und das Schweiß- oder Lötwerkzeug (15) gemeinsam in Längsrichtung (X) der Bördelkante (1b) bewegt werden und das Bördelglied (13; 13') als Andrückeinrichtung für das Schweiß- oder Lötwerkzeug (15) dienend den Flansch (1c; 1d; 1e) für die Erzeugung der Schweiß- oder Lötnaht (4; 5; 7) gegen das Innenblech (2) drückt.

5. Verfahren nach dem vorhergehenden Anspruch, **dadurch gekennzeichnet, dass** der Flansch (1c; 1d; 1e) durch Rollbördeln umgelegt wird.

6. Verfahren nach einem der zwei vorhergehenden Ansprüche, **dadurch gekennzeichnet, dass** der Flansch (1c; 1d) so weit umgelegt wird, dass er mit einem über die Bördelkante (1b) angrenzenden Bereich (la) des Außenblechs (1) eine Tasche bildet, in die das Innenblech (2) den Flansch (1c; 1d) überlappend hineinragt.

7. Verfahren nach einem der drei vorhergehenden Ansprüche, **dadurch gekennzeichnet, dass** der Flansch (1c; 1d) in der Fügeposition der Bleche (1, 2) bis gegen das Innenblech (2) umgelegt wird.

8. Verfahren nach einem der vier vorhergehenden Ansprüche, **dadurch gekennzeichnet, dass** der Bördelprozess und der Schweiß- oder Lötprozess in der Fügeposition in der gleichen Spannvorrichtung ohne Umspannen der Bleche (1, 2) durchgeführt werden.

9. Vorrichtung zum Bördeln und Schweißen oder Löten von Bauteilen (1, 2), umfassend:
a) einen Werkzeugkopf (10),
b) ein auf dem Werkzeugkopf (10) angeordnetes Bördelglied (13; 13') zum Roll- oder Gleitbördeln
c) und ein auf dem Werkzeugkopf (10) angeordnetes Schweiß- oder Lötwerkzeug (15),
d) wobei das Bördelglied (13; 13') und das Schweiß- oder Lötwerkzeug (15) so angeordnet sind, dass das Bördelglied (13; 13') eine Andrückeinrichtung für einen mit dem Schweiß- oder Lötwerkzeug (15) durchführbaren Schweiß- oder Lötprozess bildet.

10. Vorrichtung nach dem vorhergehenden Anspruch, **dadurch gekennzeichnet, dass** das Bördelglied (13; 13') und das Schweiß- oder Lötwerkzeug (15) an dem Werkzeugkopf (10) so angeordnet sind, dass eine von dem Bördelglied (13; 13') auf eines der Bauteile (1, 2) ausübbare Druckkraft und ein der Erwärmung dienender Energiestrahl (16) des Schweiß- oder Lötwerkzeugs (15) in einem geringen Abstand (d) nebeneinander den zu erzeugenden Verbund beaufschlagen.

11. Vorrichtung nach einem der zwei vorhergehenden Ansprüche, **dadurch gekennzeichnet, dass** das Schweiß- oder Lötwerkzeug (15) in einem kartesischen Koordinatensystem (R, X, Z) des Werkzeugskopfs (10) um eine Schwenkachse (X) hin und her schwenkbeweglich ist, vorzugsweise aus einer Neutralposition hin und her je gegen eine rückstellende Federkraft.

12. Vorrichtung nach einem der drei vorhergehenden Ansprüche, **dadurch gekennzeichnet, dass** das Laser- oder Lötwerkzeug (15) längs einer in Bezug auf den Werkzeugkopf (10) festen Translationsachse hin und her beweglich an dem Werkzeugkopf (10) angeordnet ist, vorzugsweise aus einer Neutralposition hin und her je gegen eine rückstellende Federkraft, wobei die Translationsachse zu einem umgelegten Flansch (1c) der Bauteile (1, 2) zumindest eine senkrechte Richtungskomponente aufweist.

13. Vorrichtung nach einem der zwei vorhergehenden Ansprüche, **dadurch gekennzeichnet, dass** auf dem Werkzeugkopf (10) ein Sensor (17) angeordnet ist, mittels dem bei einer Bewegung des Werkzeugkopfs (10) in Längsrichtung (X) einer mit dem Bördelglied (10) zu formenden Bördelkante (1b) der Verlauf einer Fuge für eine zu erzeugende Schweiß- oder Lötnaht (4; 5; 7) abtastbar ist, vorzugsweise taktil.

14. Vorrichtung nach einem der fünf vorhergehenden Ansprüche, **dadurch gekennzeichnet, dass** das Bördelglied (13; 13') eine Bördelrolle mit einer bei dem Bördeln gegen eines der Bauteile (1, 2) drückenden Lauffläche ist, die kreiszylindrisch ist oder deren Durchmesser sich axial in eine Richtung monoton verringert.

15. Vorrichtung nach einem der sechs vorhergehenden Ansprüche, **dadurch gekennzeichnet, dass** auf dem Werkzeugkopf (10) eine Reinigungseinrichtung für das Bördelglied (13; 13') angeordnet ist, mit der das Bördelglied (13; 13') während des Bördelns gereinigt werden kann.

## Claims

1. A metal sheet composite, which is a constituent of a movable or immovable attachment part, namely a door, sunroof, hatchback, boot lid or bonnet, or of an attached mudguard for or on a vehicle, or is a constituent of a body of the vehicle, wherein the metal sheet composite includes:
a) an outer metal sheet (1) comprising a flange (1c; 1d) which is folded over around a flanging edge (1b) by roll-flanging or slide-flanging;
b) an inner metal sheet (2) which forms a joint (3; 8) with the flange (1c; Id);
c) and a welding or soldering seam which is produced on or in the joint (3; 8) and fixedly connects the metal sheets (1, 2) to each other,
d) wherein the flange (1c; 1d) of the outer metal sheet (1) forms a slot,
**characterised in that**
e1) the inner metal sheet (2) protrudes into the slot in order to form a lap joint (3) with the flange (1d) on an interior side of the flange in relation to the slot, wherein the flange (1d) points at an inclination away from the region (1a) of the outer metal sheet (1) which faces opposite, such that the slot narrows in the shape of a funnel in the direction of a flanging base which includes the flanging edge (1b),
e2) or the flange (1c; 1d) and the inner metal sheet (2) form a lap joint (8) on the outer side of the flange (1c; 1d) which faces away from the slot, and the welding or soldering seam is a welding seam (4) which extends along the outer side of the flange (1c; 1d).

2. The metal sheet composite according to the preceding claim, **characterised in that** the welding or soldering seam is a hollow seam (4) or an I seam (5).

3. The metal sheet composite according to any one of the preceding claims, **characterised in that** it is a constituent of a body of the vehicle, namely a roof, a side part - in particular, a wheel arch - or a connection between a roof and a side part.

4. A method for joining metal sheets, wherein:
a) an outer metal sheet (1) and an inner metal sheet (2) are fixed relative to each other in a joining position;
b) a flange (1c; 1d; 1e) is folded over around a flanging edge (1b) on the outer metal sheet (1) in the joining position by means of a flanging member (13; 13') which is moved in the longitudinal direction of the flanging edge (1b);
c) the inner metal sheet (2) and the flange (1c; 1d; 1e) form a joint (3; 6; 8) in the joining position;
d) the metal sheets (1, 2) are connected to each other on or in the joint (3; 6; 8) by producing a welding or soldering seam (4; 5; 7),
e) and the welding or soldering seam (4; 5; 7) is produced by means of a welding or soldering tool (15) which follows the flanging member (13; 13') in the longitudinal direction (X) of the flanging edge (1b) while the flange (1c; 1d; 1e) is being folded over,
f) wherein the flanging member (13; 13') and the welding or soldering tool (15) are moved together in the longitudinal direction (X) of the flanging edge (1b), and the flanging member (13; 13') - serving as a pressing means for the welding or soldering tool (15) - presses the flange (1c; 1d; 1e) against the inner metal sheet (2) in order to produce the welding or soldering seam (4; 5; 7).

5. The method according to the preceding claim, **characterised in that** the flange (1c; 1d; 1e) is folded over by roll-flanging.

6. The method according to any one of the preceding two claims, **characterised in that** the flange (1c; 1d) is folded over far enough that it forms a slot with a region (1a) of the outer metal sheet (1) which borders it via the flanging edge (1b), wherein the inner metal sheet (2) protrudes into said slot, overlapping the flange (1c; 1d).

7. The method according to any one of the preceding three claims, **characterised in that** when the metal sheets (1, 2) are in the joining position, the flange (1c; 1d) is folded over up to and against the inner metal sheet (2).

8. The method according to any one of the preceding four claims, **characterised in that** the flanging process and the welding or soldering process are performed in the joining position in the same chucking device, without re-chucking the metal sheets (1, 2).

9. A device for flanging and welding or soldering component parts (1, 2), including:
a) a tool head (10);
b) a flanging member (13; 13'), arranged on the tool head (10), for roll-flanging or slide-flanging;
c) and a welding or soldering tool (15) arranged on the tool head (10),
d) wherein the flanging member (13; 13') and the welding or soldering tool (15) are arranged such that the flanging member (13; 13') forms a pressing means for a welding or soldering process which can be performed using the welding or soldering tool (15).

10. The device according to the preceding claim, **characterised in that** the flanging member (13; 13') and the welding or soldering tool (15) are arranged on the tool head (10) such that a pressure force which can be exerted by the flanging member (13; 13') on one of the component parts (1, 2) and an energy beam (16) of the welding or soldering tool (15) which serves for heating charge the composite to be produced, at a small distance (d) next to each other.

11. The device according to any one of the preceding two claims, **characterised in that** the welding or soldering tool (15) can pivot back and forth about a pivoting axis (X) in a Cartesian co-ordinate system (R, X, Z) of the tool head (10), preferably back and forth from a neutral position against a restoring spring force in each case.

12. The device according to any one of the preceding three claims, **characterised in that** the laser or soldering tool (15) is arranged on the tool head (10) such that it can be moved back and forth along a translational axis which is fixed in relation to the tool head (10), preferably back and forth from a neutral position against a restoring spring force in each case, wherein the translational axis comprises at least a perpendicular directional component with respect to a folded-over flange (1c) of the component parts (1, 2).

13. The device according to any one of the preceding two claims, **characterised in that** a sensor (17) is arranged on the tool head (10), by means of which the progression of a joint for a welding or soldering seam (4; 5; 7) to be produced can be scanned, preferably tactilely, during a movement of the tool head (10) in the longitudinal direction (X) of a flanging edge (1b) which is to be shaped using the flanging member (13; 13').

14. The device according to any one of the preceding five claims, **characterised in that** the flanging member (13; 13') is a flanging roller comprising a running surface which presses against one of the component parts (1, 2) during flanging and is circular-cylindrical or has a diameter which evenly decreases axially in one direction.

15. The device according to any one of the preceding six claims, **characterised in that** a cleaning means for the flanging member (13; 13') is arranged on the tool head (10), using which the flanging member (13; 13') can be cleaned during flanging.

## Revendications

1. Assemblage de tôles qui fait partie d'une pièce rapportée, mobile ou non, à savoir une porte, un toit coulissant, un hayon, un couvercle de coffre, un capot de moteur ou une aile montée pour ou sur un véhicule ou qui fait partie d'une carrosserie du véhicule, ledit assemblage de tôles comprenant :
a) une tôle extérieure (1) avec une bride (1e, 1d) repliée autour d'une bordure (1 b) par bordage par roulement ou glissement,
b) une tôle intérieure (2) qui forme un joint (3, 8) avec la bride (1c, 1d),
c) et une soudure ou brasure produite sur ou dans le joint (3 ; 8) reliant à demeure les tôles (1 ; 2) entre elles,
d) la tôle extérieure (1) formant une poche avec sa bride (1c ; 1d),
**caractérisé en ce que**
e1) la tôle intérieure (2) fait saillie dans la poche pour former avec la bride (1d) un joint à chevauchement (3) d'un côté de la bride intérieure par rapport à la poche, la bride (1d) inclinée s'écartant d'une zone opposée (la) de la tôle extérieure (1) tournée vers elle de telle sorte que la poche se rétrécisse en entonnoir dans la direction d'un fond du bord comprenant la bordure (1b),
e2) ou la bride (1c ; 1d) et la tôle intérieure (2) forment un joint à chevauchement (8) sur le côté extérieur de la bride (1c ; 1d) opposé à la poche et la soudure ou brasure forme un joint soudé (4) qui s'étend le long de la face extérieure de la bride (1c ; 1d).

2. Assemblage de tôles selon la revendication précédente, **caractérisé en ce que** la soudure ou brasure est un joint d'angle (4) ou un joint en I (5).

3. Assemblage de tôles selon l'une des revendications précédentes, **caractérisé en ce qu'**il fait partie d'une carrosserie du véhicule, à savoir d'un toit, d'un côté, en particulier du garde-boue, ou d'une fixation d'un toit avec un côté.

4. Procédé d'assemblage de tôles dans lequel :
a) une tôle extérieure (1) et une tôle intérieure (2) sont fixées dans une position d'assemblage l'une par rapport à l'autre,
b) une bride (1c ; 1d ; 1e) est repliée autour de la bordure (1b) sur la tôle extérieure (1) dans la position d'assemblage à l'aide d'un organe de bordage (13 ; 13') déplacé dans la direction longitudinale d'une bordure (1b),
c) la tôle intérieure (2) forme un joint (3 ; 6 ; 8) dans la position d'assemblage avec la bride (1c ; 1d ; 1e)
d) et les tôles (1, 2) sont reliées l'une à l'autre sur ou dans le joint (3 ; 6 ; 8) par production d'une soudure ou brasure (4 ; 5 ; 7),
e) et la soudure ou brasure (4 ; 5 ; 7) est produite à l'aide d'un outil de soudage ou de brasage (15) qui suit l'organe de bordage (13 ; 13') lors du repliage de la bride (1c ; 1d ; 1e) dans la direction longitudinale (X) de la bordure (1b),
f) l'organe de bordage (13 ; 13') et l'outil de soudage ou de brasage (15) étant déplacés ensemble dans la direction longitudinale (X) de la bordure (1b) et l'organe de bordage (13, 13') servant de dispositif de pression pour l'outil de soudage ou de brasage (15), pressant la bride (1c ; 1d ; 1e) pour la production de la soudure ou brasure (4 ; 5 ; 7) contre la tôle intérieure (2).

5. Procédé selon la revendication précédente, **caractérisé en ce que** la bride (1c ; 1d ; 1e) est repliée par bordage par roulement.

6. Procédé selon l'une des deux revendications précédentes, **caractérisé en ce que** la bride (1c ; 1d) est repliée jusqu'à ce qu'elle forme une poche dans laquelle la tôle intérieure (2) s'insère à chevauchement avec la bride (1c ; 1d) avec une zone (la) de la tôle extérieure (1) recouvrant la bordure (1b).

7. Procédé selon l'une des trois revendications précédentes, **caractérisé en ce que** la bride (1c ; 1d) est repliée jusque contre la tôle intérieure (2) dans la position d'assemblage des tôles (1, 2).

8. Procédé selon l'une des quatre revendications précédentes, **caractérisé en ce que** l'opération de bordage et l'opération de soudage ou de brasage sont effectuées dans la position d'assemblage dans le même dispositif de serrage sans devoir desserrer les tôles (1, 2).

9. Procédé de bordage et de soudage ou brasage d'éléments (1, 2) comprenant :
a) une tête d'outil (10),
b) un organe de bordage (13 ; 13') disposé sur la tête d'outil (10) pour un bordage par roulage ou glissement,
c) et un outil de soudage ou de brasage (15) disposé sur la tête d'outil (10),
d) l'organe de bordage (13 ; 13') et l'outil de soudage ou de brasage (15) étant disposés de telle sorte que l'organe de bordage (13 ; 13') forme un dispositif de pression pour une opération de soudage ou de brasage à effectuer avec l'outil de soudage ou de brasage (15).

10. Dispositif selon la revendication précédente, **caractérisé en ce que** l'organe de bordage (13 ; 13') et l'outil de soudage ou de brasage (15) sont disposés sur la tête d'outil (10) de telle sorte qu'une force de pression susceptible d'être exercée par l'organe de bordage (13 ; 13') sur l'une des pièces (1, 2) et un faisceau d'énergie (16), servant au chauffage, de l'outil de soudage ou de brasage (15), agissent à une faible distance (d) l'un de l'autre, pour produire l'assemblage.

11. Dispositif selon l'une des deux revendications précédentes, **caractérisé en ce que** l'outil de soudage ou de brasage (15) est mobile à pivotement en va-et-vient autour d'un pivot (X) dans un système de coordonnées cartésien (R, X, Z) de la tête d'outil (10), de préférence en va-et-vient à partir d'une position neutre, toujours à l'encontre d'une force de ressort de rappel.

12. Dispositif selon l'une des trois revendications précédentes, **caractérisé en ce que** l'outil de soudage ou de brasage (15) est disposé pour se déplacer en va-et-vient sur la tête d'outil (10) le long d'un axe de translation fixe par rapport à la tête d'outil (10), de préférence en va-et-vient à partir d'une position neutre contre une force de ressort de rappel, l'axe de translation présentant au moins une composante de direction perpendiculaire par rapport à une bride (1c) repliée des éléments (1, 2).

13. Dispositif selon l'une des deux revendications précédentes, **caractérisé en ce qu'**il est disposé sur la tête d'outil (10) un détecteur (17) à l'aide duquel le tracé d'un joint pour un soudage ou un brasage à produire (4 ; 5 ; 7) peut être balayé, de préférence de manière tactile, par déplacement de la tête d'outil (10) dans la direction longitudinale (X) d'une bordure (1b) à former avec l'organe de bordage (10).

14. Dispositif selon l'une des cinq revendications précédentes, **caractérisé en ce que** l'organe de bordage (13 ; 13') est un rouleau de bordage avec une surface de roulement pressant contre l'un des éléments (1, 2) lors du bordage, laquelle est cylindrique circulaire ou son diamètre va en diminuant axialement dans une direction de manière régulière.

15. Dispositif selon l'une des six revendications précédentes, **caractérisé en ce qu'**un dispositif de nettoyage pour l'organe de bordage (13, 13') est disposé sur la tête d'outil (10), l'organe de bordage (13 ; 13') pouvant être nettoyé par celui-ci pendant le bordage,
